# EUROPEAN PATENT APPLICATION

(11) **EP 4 737 220 A1**
(43) Date of publication of application: **06.05.2026**
(21) Application number: 25203306.3
(22) Date of filing: 19.09.2025
(51) Int. Cl.: B60R 16/02

(54) **SUBSTRATE COUPLING SYSTEM AND METHOD**

(30) Priority: 01.11.2024 US 202418934378
(71) Applicant: Aptiv Technologies AG, 8200 Schaffhausen (CH)
(72) Inventor: LEWIS, Ryan, 8200 Schaffhausen (CH); BILAS, Jared, 8200 Schaffhausen (CH); SUDIK JR., Joseph, 8200 Schaffhausen (CH); PETERSON, David R., 8200 Schaffhausen (CH); MICHAEL, Jeffrey, 8200 Schaffhausen (CH); DEAN, Robert, 8200 Schaffhausen (CH)
(74) Representative: Bardehle Pagenberg Partnerschaft mbB Patentanwälte Rechtsanwälte

(57) **Abstract**

A wiring harness installation assembly includes a first member and a second member. The first member includes a locking tab. The second member includes an upper surface and a side surface. The side surface extends from the upper surface. The upper surface and the side surface define an aperture. The aperture includes a first portion and a second portion. The first portion is formed in the side surface. The second portion is formed in the upper surface. The first portion is configured to receive the locking tab. The second portion is configured to receive a tool operable to engage the locking tab.

## Description

### FIELD

The present disclosure relates to substrate coupling systems and more particularly to a system for coupling substrates for robotic installation.

### BACKGROUND

Modem vehicles (e.g., automobiles) rely on electrical wiring and electrical connections to facilitate the transmission of electricity within, and between various components of, the vehicle. Wiring harnesses (e.g., connectors and bundles of wires) play an important role in ensuring the integrity of these electrical connections and the reliability and performance of the vehicle. Wiring harnesses often lack the structural integrity (e.g., rigidity) to ensure the accurate and repeatable handling, positioning, and securement of the wiring harnesses and/or other components during an assembly process. Often, these wiring harnesses require manual installation or complex tooling to install, which can increase the cost and complexity of the wiring harnesses. For example, the wiring harnesses may be placed inside another component (e.g., a substrate) to provide the rigidity necessary to install the wiring harness robotically. These substrates are often costly and complex. In view of the foregoing, while known substrate coupling systems for vehicle wiring systems have proven acceptable for their intended purpose, a continuous need for improvement remains in the pertinent art to address the challenges associated with accurate and efficient assembly of the wiring harnesses.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

This section provides a general summary of the disclosure, and is not a comprehensive disclosure of its full scope or all of its features.

One aspect of the disclosure provides a wiring harness installation assembly. The wiring harness installation assembly includes a first member and a second member. The first member includes a locking tab. The second member includes an upper surface and a side surface. The side surface extends from the upper surface. The upper surface and the side surface define an aperture. The aperture includes a first portion and a second portion. The first portion is formed in the side surface. The second portion is formed in the upper surface. The first portion is configured to receive the locking tab. The second portion is configured to receive a tool operable to engage the locking tab.

The details of one or more implementations of the disclosure are set forth in the accompanying drawings and the description below. Other aspects, features, and advantages will be apparent from the description and drawings, and from the claims.

### BRIEF DESCRIPTION OF THE DRAWINGS

The present disclosure will become more fully understood from the detailed description and the accompanying drawings.
FIG. 1A is a perspective view of a wiring harness installation assembly in a first orientation in accordance with the principles of the present disclosure.
FIG. 1B is a perspective view of the wiring harness installation assembly of FIG. 1A in a second orientation in accordance with the principles of the present disclosure.
FIG. 2 is a perspective view of a portion of a first member of a wiring harness installation subassembly in accordance with the principles of the present disclosure.
FIG. 3 is a perspective view of a portion of a second member of a wiring harness installation subassembly in accordance with the principles of the present disclosure.

In the drawings, reference numbers may be reused to identify similar and/or identical elements.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure.

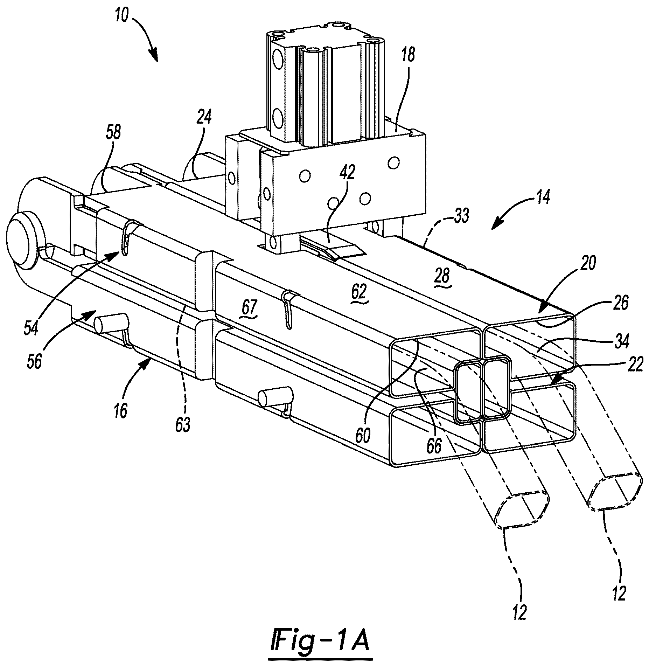

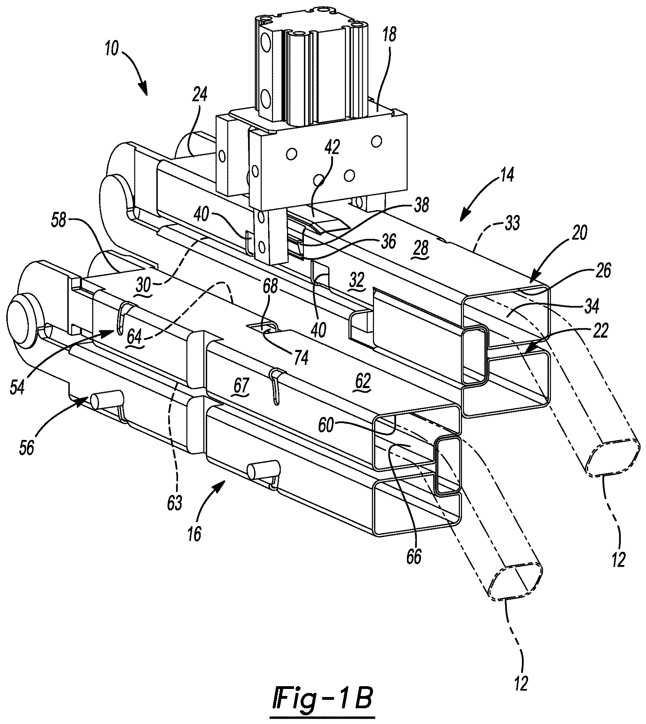

With reference to FIGS. 1A and 1B, a wiring harness installation assembly 10 is illustrated. As will be explained in more detail below, the wiring harness installation assembly 10 is used during installation of a wiring harness 12 For example, the wiring harness installation assembly 10 may be used during installation of the wiring harness 12 in a vehicle (not shown) such as an automobile.

The wiring harness installation assembly 10 may include a first subassembly 14 and a second subassembly 16. The first subassembly 14 may be coupled (e.g., removably-coupled) to the second subassembly 16. In some implementations, the first subassembly 14 and/or the second subassembly 16 receives the wiring harness 12. In this regard, as will be explained in more detail below, in some implementations, the first subassembly 14 and/or the second subassembly 16 forms a hollow conduit in which the wiring harness 12 is disposed.

During installation (e.g., installation into a vehicle), the first subassembly 14 and/or the second subassembly 16 may be manipulated by a tool 18. In some implementations, the tool 18 is an end effector (e.g., an end effector located at an end of a robotic arm).

While certain features herein will be shown and described as being a part of the first subassembly 14 or the second subassembly 16, it will be appreciated that those features may be a part of the other of the first subassembly 14 or the second subassembly 16 or both the first subassembly 14 and the second subassembly 16 within the scope of the present disclosure.

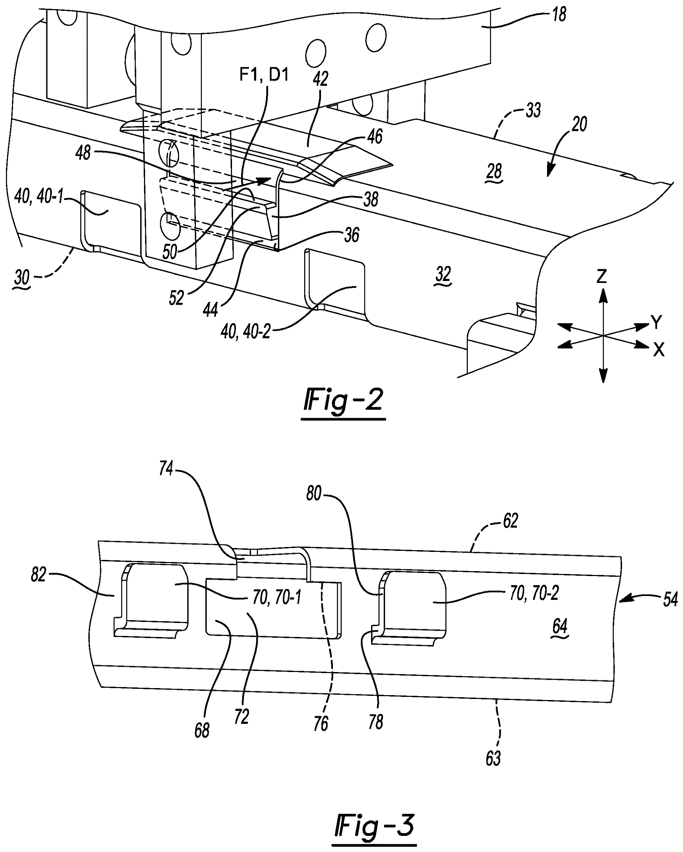

With reference to FIGS. 1A, 1B, and 2, the first subassembly 14 may include a first member 20 and a second member 22 coupled (e.g., rotatably-coupled) to the first member 20. The first member 20 may include a first end 24, a second end 26 opposite the first end 24, an upper wall 28, a lower wall 30, a first side wall 32, and a second side wall 33. The upper wall 28 may extend between the first end 24 and the second end 26. The lower wall 30 may be opposite the upper wall 28 and extend between the first end 24 and the second end 26. The first side wall 32 may extend between the upper wall 28 and the lower wall 32 and between the first end 24 and the second end 26. The second side wall 33 may be opposite the first side wall 32 and extend between the upper wall 28 and the lower wall 32.

In some implementations, the upper wall 28, the lower wall 30, the first side wall 32, and the second side wall 33 form a hollow conduit 34 in which the wiring harness 12 is disposed during an installation method. In this regard, while the conduit 34 is generally shown and described herein as being formed by the upper wall 28, the lower wall 30, the first side wall 32, and the second side wall 33, it will be appreciated that the conduit 34 may be formed by one or more of the upper wall 28, the lower wall 30, the first side wall 32, and the second side wall 33 within the scope of the present disclosure. For example, the conduit 34 may be formed by one of the upper wall 28, the lower wall 30, the first side wall 32, and the second side wall 33 such that the conduit 34 has a cylindrical cross-sectional shape, a planar cross-sectional shape, etc.

With reference to FIG. 2, the first member 20 may include a slot 36, a flexible locking tab 38, one or more windows 40, and a protrusion 42. In some implementations, the slot 36, the locking tab 38, the one or more windows 40, and the protrusion 42 are disposed between the first end 24 and the second end 26 of the first member 22. While the slot 36, the locking tab 38, the one or more windows 40, and the protrusion 42 are shown and described herein as being on or a part of the first member 20, it will be appreciated that the slot 36, the locking tab 38, the one or more windows 40, and/or the protrusion 42 may be on or a part of the second member 22 within the scope of the present disclosure.

The slot 36 may be defined at least partially by the upper wall 28 and the first side wall 32. For example, a first portion 44 of the slot 36 may be formed in the first side wall 32, and a second portion 46 of the slot 36 may be formed in the upper wall 28. In some implementations, the locking tab 38 is disposed in the slot 36. For example, the locking tab 38 may be disposed within the first portion 44 and/or the second portion 46 of the slot 36.

The locking tab 38 may include a first surface 48 extending from the upper wall 28 of the first member 20, a second surface 50 extending transversely from the first surface 48, and a third surface 52 extending transversely from the second surface 50. In this regard, the first surface 48 may extend in a direction (e.g., the Z-direction) substantially parallel (e.g., +/- 20 degrees) to the lower wall 30. The second surface 50 may extend in a direction (e.g., the Y-direction) substantially perpendicular (e.g., +/- 20 degrees) to the first surface 48. The third surface 52 may extend in a direction (e.g., the Y-direction) substantially perpendicular (e.g., +/- 20 degrees) to the second surface 50.

As will be explained in more detail below, during use of the first subassembly 14, the locking tab 38 (e.g., the second surface 50) may engage a corresponding feature on the second subassembly 16 to inhibit movement (e.g., movement in the Z-direction) of the first subassembly 14 relative to the second subassembly 16. The tool 18 may engage, and impart a force F1 on, the locking tab 38 (e.g., the third surface 52) and that may cause the locking tab 38 to move (e.g., flex, bend, etc.) in a direction D1 (e.g., the Y-direction). The force F1 may cause the locking tab 38 (e.g., the second surface 50) to disengage from the second subassembly 16.

Each window 40 of the one or more windows 40 may be defined at least partially by the lower wall 30 and the first side wall 32 of the first subassembly 14. As will be explained in more detail below, during use of the first subassembly 14, each window 40 of the one or more windows 40 may receive a corresponding feature on the second subassembly 16. In some implementations, the one or more windows 40 includes a first window 40-1 and a second window 40-2. The locking tab 38 may be disposed between the first window 40-1 and the second window 40-2.

The protrusion 42 may be disposed on the upper wall 28 of the first subassembly 14. For example, the protrusion 42 may extend from the upper wall 28 in the Z-direction. During use of the first subassembly 14, the tool 18 may engage the protrusion 42. In this regard, the protrusion 42 may limit the distance (e.g., in the Z-direction) the tool 18 extends within the aperture 68 of the second subassembly 16.

With reference to FIGS. 1A, 1B, and 3, the second subassembly 16 may include a first member 54 and a second member 56 coupled (e.g., rotatably-coupled) to the first member 54. The first member 54 may be coupled to the second member 56 in the same or similar ways and using the same or similar components as the first member 20 is coupled to the second member 22 of the first subassembly 14.

The first member 54 may include a first end 58, a second end 60 opposite the first end 58, an upper wall 62, a lower wall 63, a first side wall 64, and a second side wall 67. The upper wall 62 may extend from the first end 58 to the second end 60, and a first side wall 64 extending from the upper wall 62. The lower wall 63 may be opposite the upper wall 62 and extend between the first end 58 and the second end 60. The first side wall 64 may extend between the first end 58 and the second end 60. The first side wall 64 may extend between the upper wall 62 and the lower wall 63 and between the first end 58 and the second end 60. The second side wall 67 may be opposite the first side wall 64 and extend between the upper wall 62 and the lower wall 63.

In some implementations, the upper wall 62, the lower wall 63, the first side wall 64, and the second side wall 67 form a hollow conduit 66 in which the wiring harness 12 is disposed during an installation method. In this regard, while the conduit 66 is generally shown and described herein as being formed by the upper wall 62, the lower wall 63, the first side wall 64, and the second side wall 67, it will be appreciated that the conduit 66 may be formed one or more of the upper wall 62, the lower wall 63, the first side wall 64, and the second side wall 67 within the scope of the present disclosure. For example, the conduit 66 may be formed by one of the upper wall 62, the lower wall 63, the first side wall 64, and the second side wall 67 such that the conduit 66 has a cylindrical cross-sectional shape, a planar cross-sectional shape, etc.

With reference to FIG. 3, the first member 54 may include an aperture 68 and one or more hooks 70. The one or more hooks 70 may extend from the first side wall 64, and the aperture 68 may be defined at least partially by the upper wall 62 and the first side wall 64. While the aperture 68 and the one or more hooks 70 are shown and described herein as being on or a part of the first member 54, it will be appreciated that the aperture 68 and the one or more hooks 70 may be on or a part of the second member 56 within the scope of the present disclosure.

In some implementations, the aperture 68 includes a first portion 72 formed in the first side wall 64, and a second portion 74 formed in the upper wall 62. During use of the second subassembly 16, the first portion 72 may receive the locking tab 38 of the first subassembly 14. For example, the first portion 72 may at least partially define a first surface 76 that may engage the second surface 50 of the locking tab 38 during use of the installation assembly 10. Movement of the first subassembly 14 relative to the second subassembly 16 may be inhibited when the locking tab 38 is disposed within the aperture 68. During a method of installing the wiring harness 12, the aperture 68 (e.g., the second portion 74) may receive the tool 18. In this regard, the second portion 74 may allow the tool 18 to move (e.g., in the Z-direction) and engage/disengage the locking tab 38 disposed within the first portion 72.

The one or more hooks 70 may include a first hook 70-1 and a second hook 70-2. In some implementations, the aperture 68 is disposed between the first hook 70-1 and the second hook 70-2. Each hook 70 may include a first arm 78 extending from the first side wall 64 and a second arm 80 extending from the first arm 78 such that the first arm 78 and the second arm 80 define an "L" shape. In this regard, the first side wall 64 and the hook 70 (e.g., first arm 78 and the second arm 80) define a void 82. In an assembled configuration, each hook 70 of the second subassembly 16 may be disposed within a corresponding window 40 on the first member 20 of the first subassembly 14. In this regard, each hook 70 may be disposed within a corresponding window 40 of the first member 20, and a portion of the first side wall 32 of the first member 20 may be disposed within the void 82. The one or more hooks 70 may inhibit movement of (e.g., secure) the first subassembly 14 relative to the second subassembly 16.

With reference to FIGS. 1A-3, a method of using a wiring harness installation assembly (e.g., the wiring harness installation assembly 10) will be described. In a first configuration (FIG. 1A), the first subassembly 14 is coupled to the second subassembly 16. In the first configuration, the locking tab 38 of the first subassembly 14 is disposed within the aperture 68of the second subassembly 16. In this regard, the second surface 50 of the locking tab 38 may engage the first surface 76 in the first configuration. In some implementations, each hook 70 of the second subassembly 16 is disposed within a corresponding window 40 of the first subassembly 14.

The tool 18 may move in the Z-direction to engage the first subassembly 14. In particular, as the tool 18 moves in the Z-direction, the second portion 74 of the aperture 68 may receive the tool 18, and the tool 18 may engage the locking tab 38 (e.g., the third surface 52). The tool 18 may continue to move (e.g., in the Z-direction) until the tool 18 engages the protrusion 42.

The tool 18 may also move in the Y-direction. Movement of the tool 18 in the Y-direction may impart the force F1 on the locking tab 38 and cause the locking tab 38 to move (e.g., bend) in the direction D1 (e.g., the Y-direction). The force F1 may remove the locking tab 38 (e.g., the second surface 50) from the aperture 68 (e.g., the first surface 76).

When the locking tab 38 is removed from the aperture 68, the first subassembly 14 may move freely relative to the second subassembly 16. In this regard, the tool 18 may move the first subassembly 14 (e.g., in the Z-direction) relative to the second subassembly 16. For example, the tool 18 may move the first subassembly 14 into a second configuration (FIG. 1B) and into an assembly location within a vehicle, for example.

The following clauses provide an exemplary configuration for a wiring harness installation assembly, as described above.

Clause 1: A wiring harness installation assembly comprising: a first member including a locking tab; and a second member including an upper surface and a side surface extending from the upper surface, the upper surface and the side surface defining an aperture including a first portion formed in the side surface and a second portion formed in the upper surface, the first portion configured to receive the locking tab, the second portion configured to receive a tool operable to engage the locking tab.

Clause 2: The assembly of clause 1, wherein the first member includes an upper surface and a side surface extending from the upper surface, the upper surface and the side surface defining a slot including a first portion formed in the side surface of the first member and a second portion formed in the upper surface of the first member, the first portion and the second portion of the slot extending along the locking tab.

Clause 3: The assembly of clause 2, wherein the locking tab is disposed within the slot.

Clause 4: The assembly of any of clauses 1 through 3, wherein: the locking tab includes a first surface extending in a first direction, the first direction is transverse to the side surface, and the aperture is configured to receive the first surface.

Clause 5: The assembly of clause 4, wherein: the first portion of the aperture defines a first surface, and the first surface of the first portion is configured to receive the first surface of the locking tab.

Clause 6: The assembly of clause 4, wherein the locking tab includes a second surface extending from the first surface in a second direction transverse to the first direction and the second surface is configured to engage the tool.

Clause 7: The assembly of any of clauses 1 through 6, wherein the second member includes a first hook and the first member includes a first window configured to receive the first hook.

Clause 8: The assembly of clause 7, wherein the first hook includes a first arm extending from the side surface of the second member and a second arm extending from the first arm.

Clause 9: The assembly of clause 8, wherein the first hook defines an "L"-shape.

Clause 10: The assembly of any of clauses 8 through 9, wherein the second arm and the side surface of the second member define a void.

Clause 11: The assembly of clause 10, wherein, in an assembled configuration, the first member is at least partially disposed within the void.

Clause 12: The assembly of any of clauses 7 through 11, wherein the first member includes an upper surface, a bottom surface opposite the upper surface, and a side surface extending from the upper surface to the bottom surface, and the first window is defined at least partially by the side surface and the bottom surface.

Clause 13: The assembly of any of clauses 7 through 12, wherein the second member includes a second hook and the first member includes a second window configured to receive the second hook.

Clause 14: The assembly of clause 13, wherein the second hook defines an "L"-shape.

Clause 15: The assembly of any of clauses 13 through 14, wherein the aperture is disposed between the first hook and the second hook.

Clause 16: The assembly of any of clauses 13 through 15, wherein the locking tab is disposed between the first window and the second window.

Clause 17: The assembly of any of clauses 1 through 16, wherein, in an assembled configuration, the locking tab is at least partially disposed within the aperture.

Clause 18: The assembly of any of clauses 1 through 17, wherein the first member includes a protrusion extending from the upper surface and configured to engage the tool.

Clause 19: The assembly of any of clauses 1 through 18, wherein the first member forms a first conduit and the second member forms a second conduit.

Clause 20: The assembly of clause 19, wherein at least one of the first conduit or the second conduit is configured to receive a wiring harness.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The foregoing description has been provided for purposes of illustration and description. It is not intended to be exhaustive or to limit the disclosure. Individual elements or features of a particular configuration are generally not limited to that particular configuration, but, where applicable, are interchangeable and can be used in a selected configuration, even if not specifically shown or described. The same may also be varied in many ways. Such variations are not to be regarded as a departure from the disclosure, and all such modifications are intended to be included within the scope of the disclosure.

## Claims

1. A wiring harness (12) installation assembly (10) comprising:
a first member (20, 54) including a locking tab (38); and
a second member (22, 56) including an upper surface and a side surface extending from the upper surface, the upper surface and the side surface defining an aperture (68) including a first portion (44, 72) formed in the side surface and a second portion (46, 74) formed in the upper surface, the first portion (44, 72) configured to receive the locking tab (38), the second portion (46, 74) configured to receive a tool operable to engage the locking tab (38).

2. The assembly (10) of claim 1, wherein the first member (20, 54) includes an upper surface and a side surface extending from the upper surface, the upper surface and the side surface defining a slot (36) including a first portion (44, 72) formed in the side surface of the first member (20, 54) and a second portion (46, 74) formed in the upper surface of the first member (20, 54), the first portion (44, 72) and the second portion (46, 74) of the slot (36) extending along the locking tab (38).

3. The assembly (10) of claim 2, wherein the locking tab (38) is disposed within the slot (36).

4. The assembly (10) of any one of the preceding claims, wherein:
the locking tab (38) includes a first surface (48, 76) extending in a first direction,
the first direction is transverse to the side surface, and
the aperture (68) is configured to receive the first surface (48, 76),
wherein preferably:
the first portion (44, 72) of the aperture (68) defines a first surface (48, 76), and
the first surface (48, 76) of the first portion (44, 72) is configured to receive the first surface (48, 76) of the locking tab (38).

5. The assembly (10) of claim 4, wherein the locking tab (38) includes a second surface (50) extending from the first surface (48, 76) in a second direction transverse to the first direction and the second surface (50) is configured to engage the tool (18).

6. The assembly (10) of any one of the preceding claims, wherein the second member (22, 56) includes a first hook and the first member (20, 54) includes a first window configured to receive the first hook.

7. The assembly (10) of claim 6, wherein the first hook includes a first arm (78) extending from the side surface of the second member (22, 56) and a second arm (80) extending from the first arm (78),
wherein preferably the first hook defines an "L"-shape.

8. The assembly (10) of claim 7, wherein the second arm (80) and the side surface of the second member (22, 56) define a void (82),
wherein preferably, in an assembled configuration, the first member (20, 54) is at least partially disposed within the void (82).

9. The assembly (10) of any one of the preceding claims 7 or 8, wherein the first member (20, 54) includes an upper surface, a bottom surface opposite the upper surface, and a side surface extending from the upper surface to the bottom surface, and the first window is defined at least partially by the side surface and the bottom surface.

10. The assembly (10) of any one of the preceding claims 7 to 9, wherein the second member (22, 56) includes a second hook (70) and the first member (20, 54) includes a second window configured to receive the second hook (70),
wherein preferably the second hook (70) defines an "L"-shape.

11. The assembly (10) of claim 10, wherein the aperture (68) is disposed between the first hook and the second hook (70).

12. The assembly (10) of any one of the preceding claims 10 or 11, wherein the locking tab (38) is disposed between the first window and the second window.

13. The assembly (10) of any one of the preceding claims, wherein, in an assembled configuration, the locking tab (38) is at least partially disposed within the aperture (68).

14. The assembly (10) of any one of the preceding claims, wherein the first member (20, 54) includes a protrusion (42) extending from the upper surface and configured to engage the tool (18).

15. The assembly (10) of any one of the preceding claims, wherein the first member (20, 54) forms a first conduit and the second member (22, 56) forms a second conduit,
wherein preferably at least one of the first conduit or the second conduit is configured to receive a wiring harness (12).
